# EUROPÄISCHE PATENTSCHRIFT

(11) **EP 3 598 594 B1**
(45) Veröffentlichungstag und Bekanntmachung des Hinweises auf die Patenterteilung: **16.02.2022**
(21) Anmeldenummer: 18184870.6
(22) Anmeldetag: 21.07.2018
(51) Int. Cl.: H02G 3/06, H02G 3/22, H02G 15/007

(54) **KABELVERSCHRAUBUNG**
CABLE CONNECTION
PRESSE-ÉTOUPE

(43) Veröffentlichungstag der Anmeldung: 22.01.2020
(73) Patentinhaber: Lapp Engineering AG, 6330 Cham (CH)
(72) Erfinder: KRECH, Johann, 72160 Horb am Neckar (DE)
(74) Vertreter: Rutz & Partner

(56) Entgegenhaltungen:
- WO-A1-02/067400
- WO-A1-2009/144505
- DE-A1-102007 017 918
- DE-A1-102011 053 447

## Beschreibung

Die Erfindung betrifft eine Kabelverschraubung zur Durchführung eines Kabels durch eine Montageöffnung in einer Montagewand oder dem Gehäuse eines elektrischen Geräts.

Kabelverschraubungen werden dazu genutzt, Kabel durch Wände und Gehäuse von elektrischen Schaltschränken, elektrischen Geräten und dergleichen hindurchzuführen. Zweck der Kabelverschraubung ist die Vermeidung von Beschädigungen des Kabels im Bereich der Durchführung sowie die zug- und druckfeste Befestigung des Kabels bezüglich der Montagewand. Zudem soll durch die Kabelverschraubung eine staub- und gegebenenfalls wasser- oder gasdichte Hindurchführung des Kabels ermöglicht werden.

Aus der EP0551664A1 ist eine Kabelverschraubung mit einem in einem Gehäuse angeordneten Lamellenkorb bekannt. Der Lamellenkorb ist durch eine Hutmutter, welche auf das Gehäuse aufschraubbar ist, beaufschlagbar, so dass die Lamellen des Lamellenkorbs einen Dichtungsring gegen ein durchgeführtes Kabel pressen. Nachteilig an dieser Lösung ist, dass die Lamellen aufgrund ihrer feinen Struktur abbrechen können. Um eine auslegungsgemässe Dichtheit des durchgeführten Kabels sicherzustellen, muss die Hutmutter mit einem Drehmomentschlüssel angezogen werden, wobei ein vorgegebenes minimales Drehmoment erreicht werden muss. Ein zu hohes Drehmoment wiederum führt zu einer Beschädigung der Kabelverschraubung.

Aus der EP2107657A2 ist eine Kabelverschraubung mit zwei sich in entgegengesetzte Richtungen erstreckenden Lamellenkörben bekannt. In jedem Lamellenkorb sitzt ein elastischer Dichtungsring, der durch den jeweiligen Lamellenkorb radial zur Mittelachse in Richtung des durchgeführten Kabels beaufschlagbar ist. Nachteilig an dieser Lösung ist die komplexe Struktur des doppelten Lamellenkorbs, was zu einem hohen Fertigungsaufwand führt. Zudem können die Lamellen aufgrund ihrer feinen Struktur abbrechen.

Aus der DE202012012427U1 ist eine Kabelverschraubung mit einem Dichteinsatz bekannt, welcher durch eine auf dem Grundkörper aufschraubbare Druckschraube beaufschlagbar ist. Der Dichteinsatz ist drehbar im Grundkörper gelagert, so dass es beim Beaufschlagen des durchgeführten Kabels mit dem Dichteinsatz zu einem Verdrillen des Kabels kommen kann. Zudem ist die Beaufschlagung des Dichteinsatzes nicht homogen.

Aus der DE102007017918A1 ist eine Befestigungsanordnung für eine Kabel- oder Schlauchverschraubung bekannt. Die Vorrichtung umfasst einen Stutzen, der im Anschluss an einen Anschlagbund ein Gewinde trägt. Das Gewinde trägt ein Schraubelement, das den Stutzen mit der Montagewand verspannt. Der Stutzen weist Aufnahmen auf, an denen ein Werkzeugeinsatz drehfest festlegbar ist. Der Werkzeugeinsatz weist eine Werkzeugaufnahme auf, in die ein Werkzeug einsetzbar ist.

Die WO2009/144505A1 zeigt eine Kabelverschraubung mit einer mehrteiligen Dichtung. Die Dichtung weist einen Grundkörper aus einem ersten Gummi-Material auf, an dem mehrere Stützringe aus einem härteren Material angeordnet sind.

Die DE102011053447A1 offenbart eine Kabelverschraubung mit einem Dichtelement und einem Zugentlastungselement. Das Dichtelement und das Zugentlastungselement bestehen aus separaten Bauteilen und sind im Stutzen in axialer Richtung hintereinander angeordnet.

Aus der WO02/067400A1 ist eine Kabelverschraubung mit einem Barrierering, einem Kompressionsring und einem äusseren Dichtring bekannt. Der Barrierering ist aus einem elastischen Material gefertigt.

Der Erfindung liegt daher die Aufgabe zu Grunde, eine verbesserte Kabelverschraubung zu schaffen.

Insbesondere ist eine Kabelverschraubung bereitzustellen, die eine weitgehend gleichmässige radiale und longitudinale Klemmung und zuverlässige Abdichtung eines durchgeführten Kabels ermöglicht.

Zudem soll die Kabelverschraubung einfach anwendbar sein und mögliche Anwendungsfehler oder Fehlmontagen weitgehend ausschliessen. Insbesondere soll eine gleichmässige radiale und longitudinale Klemmung erzielt werden, ohne dass ein Drehmomentschlüssel eingesetzt wird.

Ferner ist eine Kabelverschraubung bereitzustellen, bei der das durchgeführte Kabel vorteilhaft von einwirkenden Zugkräften entlastet wird.

Die Kabelverschraubung und deren Bestandteile sollen zudem robust sein und keine Einschränkungen bezüglich Materialauswahl aufweisen.

Ferner sind ein elektrischer Steckverbinder und ein elektrisches Gerät zu schaffen, die vorteilhaft mit einer solchen Verschraubung versehen sind.

Diese Aufgabe wird mit einer Kabelverschraubung gemäss Anspruch 1, einem elektrischen Steckverbinder gemäss Anspruch 12 und einem elektrischen Gerät gemäss Anspruch 13 gelöst. Vorteilhafte Ausgestaltungen der Erfindung sind in weiteren Ansprüchen angegeben.

Erfindungsgemäss ist vorgesehen, dass der Zugentlastungsstutzen im Bereich des wenigstens einen Klemmelements einen zweiten Aussendurchmesser aufweist, der grösser ist als der Innendurchmesser des Montagekanals und dass das wenigstens eine Klemmelement derart ausgebildet und/oder gelagert ist, dass es beim Einschieben des Zugentlastungsstutzens in den Montagekanal gegen die Mittelachse der Kabelverschraubung verdrängbar ist, um den Kabelmantel des durchgeführten Kabels zu beaufschlagen.

Der Aussendurchmesser des Zugentlastungsstutzens ist so gewählt, dass der Zugentlastungsstutzen zumindest annähernd formschlüssig in den Montagekanal einführbar ist, wobei die Klemmelemente während des Einführens verdrängt, gedreht und/oder deformiert und gegen die Mittelachse der Kabelverschraubung verschoben werden.

Das wenigstens eine Klemmelement ist derart am Zugentlastungsstutzen angeformt und/oder ausgebildet, dass es nach Einführung des Zugentlastungsstutzens in den Montagekanal durch die Innenwand des Montagekanals radial gegen die Mittelachse der Kabelverschraubung gedrückt und/oder deformiert wird und den Kabelmantel des durchgeführten Kabels mechanisch beaufschlagt und dadurch fixiert, wodurch eine Zugentlastung des Kabels resultiert. Durch die spezifische Ausgestaltung des wenigstens einen Klemmelements ist die Zugentlastung an das Kabel bzw. an die systemspezifischen Anforderungen anpassbar. Die Zugentlastung wirkt unabhängig von der Stärke des Anschraubens der Kabelverschraubung an der Montagewand. Fehlerhafte Montagen können daher weitgehend ausgeschlossen werden. Ein Drehmomentschlüssel wird normalerweise nicht benötigt.

In einer bevorzugten Ausgestaltung weist der Montagestutzen einen Stutzenkopf auf, an dessen Aussenseite vorzugsweise eine Schlüsselfläche vorgesehen ist, die von einem Werkzeug erfasst werden kann. Hierdurch kann die Kabelverschraubung mit einem Werkzeug, vorzugsweise einem Schraubenschlüssel festgeschraubt werden.

In einer weiteren besonders bevorzugten Ausgestaltung ist das elastische und/oder vorzugsweise komprimierbare Dichtelement zumindest annähernd hohlzylindrisch ausgestaltet und weist zumindest einen Dichtungssteg auf, welcher vorzugsweise senkrecht zur Längsachse als Ringnut ausgebildet ist oder peripher als Längsnut parallel zur Längsachse verläuft. Durch die einfache Form ist das Dichtelement einfach und kostengünstig herstellbar. Der wenigstens eine Dichtungssteg verbessert die Komprimierbarkeit des Dichtelements und somit auch die Abdichtung gegenüber dem Kabelmantel des durchgeführten Kabels. Vorzugsweise ist der Aussendurchmesser des Dichtelements so gewählt, dass das Dichtelement, gegebenenfalls nach einer erforderlichen Kompression, zumindest annähernd formschlüssig oder spielfrei in den Montagekanal einführbar ist. Durch diese zumindest annähernde Formschlüssigkeit wird das Dichtelement bei mechanischer Beaufschlagung in axialer Richtung so deformiert, dass der Dichtelementkanal verengt wird und eng am Kabelmantel des durchgeführten Kabels anliegt und gegen diesen abdichtet.

In einer weiteren Ausgestaltung ist der Zugentlastungsstutzen zumindest annähernd hohlzylindrisch ausgestaltet. Vorzugsweise ist vorgesehen, dass das wenigstens eine Klemmelement keilförmig oder rampenförmig ausgebildet ist und eine Aussenfläche aufweist, die vorzugsweise in Richtung zur Anschlagfläche gegen die Mittelachse geneigt ist. Der Zugentlastungsstutzen kann daher mit einem Teil, welches den ersten Aussendurchmesser aufweist in den Montagekanal eingeführt werden, bis das wenigstens eine Klemmelement anliegt und der Aussendurchmesser ansteigt. In der Folge wird das erste Klemmelement gegen die Mittelachse verdrängt, gegebenenfalls gedreht, und kann ebenfalls in den Montagekanal eintreten.

Vorzugsweise ist das wenigstens eine Klemmelement durch Einschnitte oder Aussparungen am hohlzylindrischen Zugentlastungsstutzen zumindest teilweise freigelegt und vorzugsweise durch ein Biegegelenk gelenkig gelagert. D.h., das wenigstens eine Klemmelement ist ausgeschnitten und durch verbleibendes Material, welches ein Biegeelement bildet, mit dem Hauptkörper des Zugentlastungsstutzens verbunden. Das wenigstens eine Klemmelement kann in vorzugsweisen Ausgestaltungen auch als Schnappelement oder Rastelement ausgebildet sein, das gegebenenfalls in eine im Montagekanal vorgesehene Ausnehmung einsenkbar ist, um den Zugentlastungsstutzen lösbar zu fixieren.

Vorzugsweise weist der Zugentlastungsstutzen zumindest zwei oder mehrere Klemmelemente auf, die entlang der Mittelachse auf gleicher Höhe oder gegeneinander versetzt und/oder entlang dem Umfang des Zugentlastungsstutzens vorzugsweise gleichmässig beabstandet sind. Hierdurch wird eine radial gleichmässige Zugentlastung sichergestellt. In bevorzugten Ausgestaltungen liegen sich die Klemmelemente paarweise gegenüber.

In einer weiteren besonders bevorzugten Ausgestaltung ragt der am Dichtelement anliegende Zugentlastungsstutzen im nicht mechanisch beaufschlagten Zustand um zumindest 0.5mm, vorzugweise um zumindest 1mm, gegebenenfalls in einem Bereich von 0.5mm - 2mm, aus dem Montagekanal hervor. Durch diesen Überstand wird sichergestellt, dass bei einem Anschrauben der Kabelverschraubung auf Anschlag der Zugentlastungsstutzen und das Dichtelement axial beaufschlagt und komprimiert werden, so dass die Abdichtfunktion des Dichtelements gewährleistet ist. Der Überstand ist so gewählt, dass die Kabelverschraubung auf Anschlag angeschraubt werden kann und nicht mit einem vorgegebenen Drehmoment, welches über einen Drehmomentschlüssel kontrolliert werden müsste, angezogen wird. Bei einem Anschrauben an einem Gehäuse übernimmt eine am Gehäuse vorgesehene Abstützfläche die Funktion des Anschlags und stellt die mechanische Beaufschlagung von Zugentlastungsstutzen und Dichtelement sicher. Bei einem Anschrauben an einer Montagewand wird die Kabelverschraubung auf Anschlag mit einem Zwischenstutzen, an dem eine Abstützfläche angeformt ist, verschraubt und der Zwischenstutzen mit Kabelverschraubung mit der Montagewand verschraubt.

In einer weiteren bevorzugten Ausgestaltung ist zumindest ein Klemmelement am Zugentlastungsstutzen aus einem anderen Material gefertigt als der Hauptkörper des Zugentlastungsstutzens. Hierdurch kann die Klemmwirkung optimiert werden. Vorzugweise ist der Zugentlastungsstutzen durch Spritzgiessen, besonders bevorzugt durch 2k-Spritzguss, hergestellt.

Vorzugsweise ist das Dichtelement benachbart zur Abstützfläche angeordnet. Hierdurch wird die Kriechstrecke entlang des Kabels maximiert. Um die Kriechstrecke zu erhöhen, kann die Abstützfläche auch eine Wellenform aufweisen.

Erfindungsgemäß umfasst die Kabelverschraubung einen Zwischenstutzen, der
- einen ersten Stutzenabschnitt mit einem zur Durchführung des Kabels geeigneten und mit einem Innengewinde versehenen Aufnahmekanal;
- einen mit einem Aussengewinde versehenen zweiten Stutzenabschnitt mit einem zur Durchführung des Kabels geeigneten Ausgangskanal;
- einen zwischen dem ersten Stutzenabschnitt und dem zweiten Stutzenabschnitt an der Aussenseite des Zwischenstutzens angeordneten Aussenflansch; sowie
- einen zwischen dem ersten Stutzenabschnitt und dem zweiten Stutzenabschnitt an der Innenseite des Zwischenstutzens angeordneten Innenflansch mit einer Abstützfläche
aufweist.

Durch den Zwischenstutzen ist die erfindungsgemässe Kabelverschraubung an beliebigen Montageöffnungen einsetzbar, da die für die Funktion der Kabelverschraubung wichtige Abstützfläche im Zwischenstutzen integriert ist.

Der Zwischenstutzen ist vorzugsweise aus einem elektrisch leitenden Material gefertigt und stellt über den Innenflansch oder über ein daran angeordnetes Kontaktelement eine elektrisch leitende Verbindung zum Kabelmantel oder zu einem Kabelschirm her. Hierdurch wird eine durchgängige Abschirmung vom Kabel über das Gehäuse oder die Montagewand ermöglicht.

In einer bevorzugten Ausgestaltung ist zwischen dem Montagestutzen und dem Gehäuse oder dem Zwischenstutzen und/oder zwischen dem Zwischenstutzen, insbesondere dem Aussenflansch, und der Montagewand wenigstens je ein Dichtungselement in der Ausgestaltung eines vorzugsweise elastischen Dichtungsrings oder in der Ausgestaltung wenigstens einer Ringschneide vorgesehen sind, die am Montagestutzen und/oder am Aussenflansch des Zwischenstutzens angeformt sind und in das benachbarte Werkstück eindringen können. Besonders vorteilhaft ist die Verwendung einer oder mehrerer Ringschneiden, die stirnseitig an einem Flansch oder Kopfstück angeordnet sind und beim Festziehen der Kabelverschraubung in ein benachbartes Werkstück eindringen und den Raum dazwischen abdichten.

Das Dichtelement ist vorzugsweise aus Gummi, Kautschuk, Silikon, einem Elastomermaterial, einem thermoplastischen Elastomermaterial oder einem zumindest teilelastischen Kunststoffmaterial gefertigt. In einer bevorzugten Ausgestaltung sind das Dichtelement und der Zugentlastungsstutzen miteinander verklebt oder einstückig ausgeführt. Der Zugentlastungsstutzen ist vorzugsweise aus einem Polymermaterial, insbesondere einem Polypropylenmaterial oder Polyamid, oder aus Metall gefertigt.

Das Material des Dichtelements weist vorzugsweise einen geringeren Elastizitätsmodul als das Material des Zugentlastungsstutzens auf. Hierdurch wird sichergestellt, dass vor allem das Dichtelement mechanisch deformiert wird, so dass die Abdichtfunktion erreicht wird.

Eine erfindungsgemässe Kabelverschraubung ist vorteilhaft in einen ebenfalls erfindungsgemässen Steckverbinder integrierbar. Ein mit dem Steckverbinder elektrisch verbundenes Kabel wird hierbei durch die erfindungsgemässe Kabelverschraubung ins Gehäuse des Steckverbinders eingeführt. Mit einer erfindungsgemässen Kabelverschraubung ist ein ebenfalls erfindungsgemässes elektrisches Gerät, insbesondere ein elektrischer Schaltschrank ausrüstbar. Mit dem elektrischen Gerät oder dem Schaltschrank elektrisch verbundene Kabel werden durch erfindungsgemässe Kabelverschraubungen durch die Wand des Geräts oder des Schaltschranks geführt. Aufgrund der vorteilhaften Montierbarkeit der erfindungsgemässen Kabelverschraubungen können Geräte und Schaltschränke kostengünstig gefertigt werden. Da die Kabel schonend und gleichmässig installiert sind, wird die Zuverlässigkeit der Geräte und Schaltschränke zudem erhöht.

Nachfolgend wird die Erfindung anhand von Zeichnungen näher erläutert. Dabei zeigt:
- Fig. 1a: eine über einen Zwischenstutzen 5 an einer Wand 8A montierte erfindungsgemässe Kabelverschraubung 7;
- Fig. 1b: eine an einem Gehäuse 8B montierte erfindungsgemässe Kabelverschraubung 7 in einer teilweise geschnittenen Darstellung;
- Fig. 2: die an einer Wand 8A mittels des Zwischenstutzens 5 montierte Kabelverschraubung 7 von Fig. 1a mit einem Viertelschnitt;
- Fig. 3a: die erfindungsgemässe Kabelverschraubung 7 mit einem Zwischenstutzen 5 aus Fig. 1a in Explosionsdarstellung;
- Fig. 3b: die Kabelverschraubung 7 mit dem Zwischenstutzen 5 aus Fig. 3a mit einem Viertelschnitt;
- Fig. 3c: die Kabelverschraubung 7 mit dem Zwischenstutzen 5 aus Fig. 3a mit Dichtungselementen 115; 515 in der Ausgestaltung von Ringschneiden;
- Fig. 3d: eine Detaildarstellung der am Stutzenkopf 11 vorgesehenen Ringschneiden 115 von Fig. 3c;
- Fig. 4a: die erfindungsgemässe Kabelverschraubung 7 aus Fig. 3a mit einem Viertelschnitt in partieller Explosionsdarstellung;
- Fig. 4b: die erfindungsgemässe Kabelverschraubung 7 aus Fig. 4a in einem Längsschnitt;
- Fig. 5: die Kabelverschraubung 7 an einem Gehäuse 8B von Fig. 1b mit einem Viertelschnitt;
- Fig. 6a: einen Zugentlastungsstutzen 4 und ein Dichtelement 3; und
- Fig. 6b: den Zugentlastungsstutzen 4 und das Dichtelement 3 in einer Schnittdarstellung entlang der in Fig. 6a eingezeichneten Schnittlinie A--A.

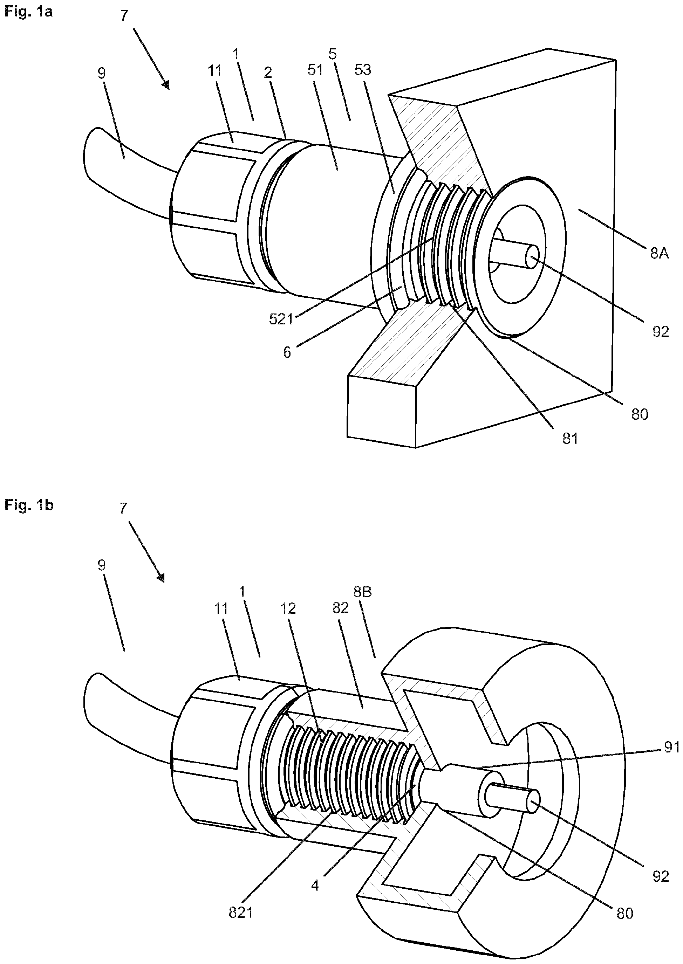

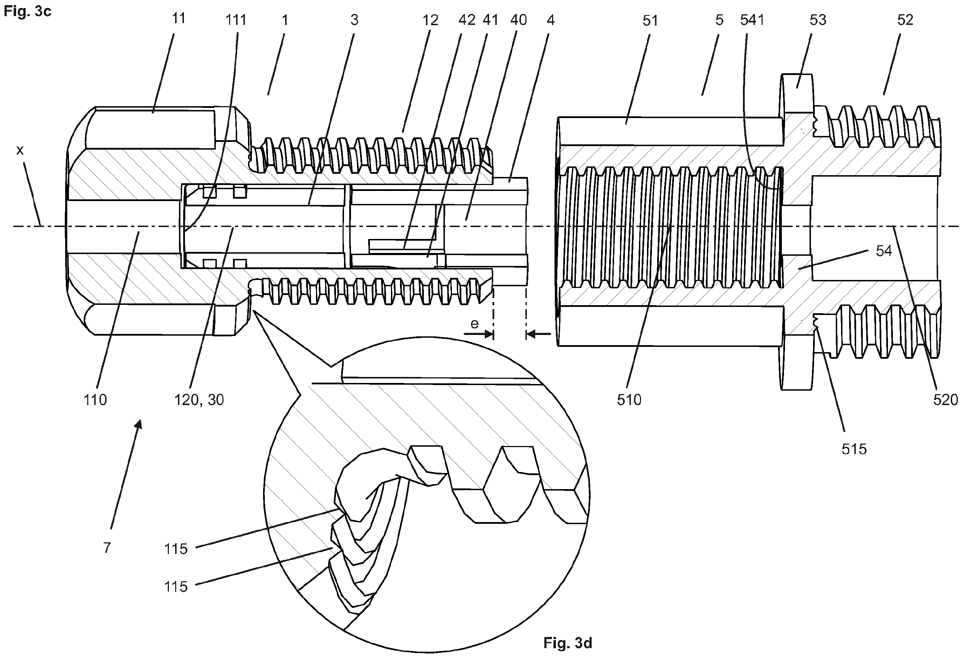

Fig. 1a zeigt eine über einen Zwischenstutzen 5 an einer Wand 8A montierte erfindungsgemässe Kabelverschraubung 7 mit einem durchgeführten Kabel 9, welches einen elektrischen Leiter 92 umfasst. Die Kabelverschraubung 7 umfasst einen Montagestutzen 1 mit einem Stutzenkopf 11, an dessen Aussenseite eine Schlüsselfläche vorgesehen ist, die von einem Werkzeug erfasst werden kann. Der Montagestutzen 1 ist in einen ersten Stutzenabschnitt 51 am Zwischenstutzen 5 eingeschraubt. Der Zwischenstutzen 5 ist über ein Aussengewinde 521 mit einem Innengewinde 81 in der Montageöffnung 80 verschraubt. Zwischen dem Montagestutzen 1 und dem Zwischenstutzen 5 ist ein Dichtungsring 2 zur Abdichtung angeordnet. An der Aussenseite des Zwischenstutzens 5 ist ein Aussenflansch 53 angeformt, an dem ein zweiter Dichtungsring 6 anliegt, mit welchem die Verbindung zwischen Zwischenstutzen 5 und Montagewand 8A abgedichtet wird. Weitere Mittel zur Abdichtung, die am Montagestutzen 1 oder am Aussenflansch 53 vorgesehen werden können, werden nachstehend mit Bezug zu Fig. 3c erläutert.

Fig. 1b zeigt eine an einem Gehäuse 8B montierte erfindungsgemässe Kabelverschraubung 7 in einer teilweise geschnittenen Darstellung. Es ist ersichtlich, dass der Montagestutzen 1 einen Stutzenkopf 11 mit der Schlüsselfläche 11 und einen daran anschliessenden Stutzenschaft 12 mit einem Aussengewinde aufweist. Mit der Kabelverschraubung 7 wird ein Kabel 9 in ein Gehäuse 8B eingeführt. Das Kabel 9 umfasst einen Leiter 92, welcher von einem Kabelmantel 91 umgeben ist. Am Gehäuse 8B ist rund um die Montageöffnung 80 ein Einführstutzen 82 mit einem Innengewinde 821 angeformt. Der Montagestutzen 1 der Kabelverschraubung 7 ist über ein Aussengewinde 12 in den Einführstutzen 82 bzw. das Innengewinde 821 eingeschraubt.

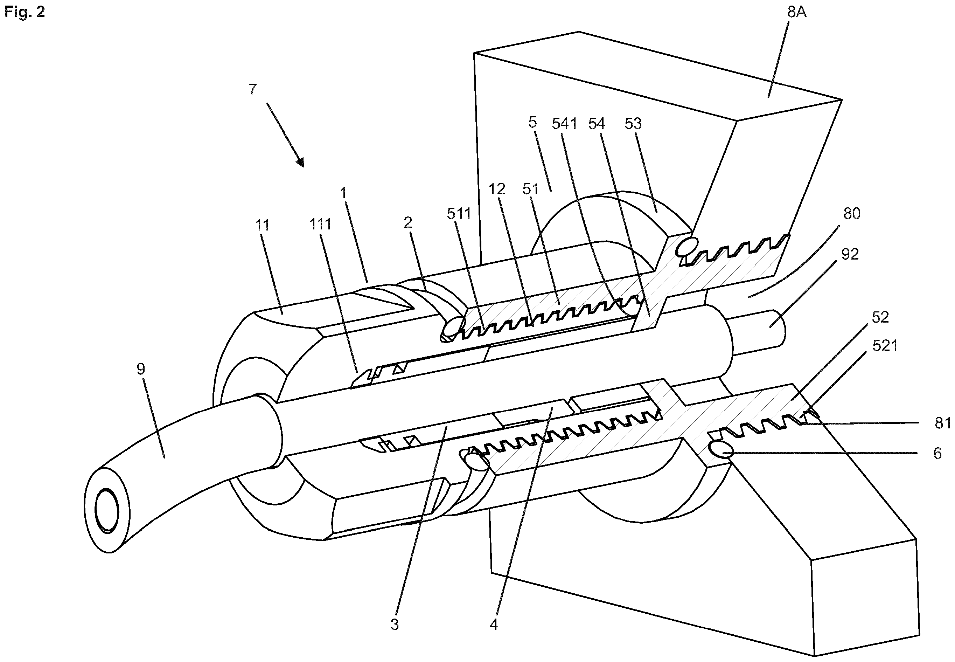

Fig. 2 zeigt die Kabelverschraubung 7 mit Montagestutzen 1 und dem an einer Wand 8A montierten Zwischenstutzen 5 von Fig. 1a mit einem Viertelschnitt. Das Kabel 9 ist durch die Kabelverschraubung 7 und durch die Montageöffnung 80 in der Montagewand 8A hindurch geführt. Der Montagestutzen 1 ist über das am Stutzenschaft 12 vorgesehene Aussengewinde mit einem Innengewinde 511 am ersten Stutzenabschnitt 51 des Zwischenstutzens 5 verschraubt. Zwischen dem Montagestutzen 1 und dem Zwischenstutzen 5 ist ein erster Dichtungsring 2 angeordnet. Der Zwischenstutzen 5 ist über ein Aussengewinde 521 am zweiten Stutzenabschnitt 52 in das Innengewinde 81 in der Montageöffnung 80 eingeschraubt. Zwischen dem ersten Stutzenabschnitt 51 und dem zweiten Stutzenabschnitt 52 ist an der Aussenseite des Zwischenstutzens 5 ein Aussenflansch 53 angeformt. Zwischen dem Aussenflansch 53 und der Montagewand 8A ist ein zweiter Dichtungsring 6 angeordnet. Innerhalb des Montagestutzens 1 sind ein Dichtelement 3 und ein Zugentlastungsstutzen 4 angeordnet. Das Kabel 9 ist durch das Dichtelement 3 und den Zugentlastungsstutzen 4 hindurch geführt. Das Dichtelement 3 liegt innerhalb des Stutzenkopfs 11 an einer Abstützfläche 111 an. Der Zugentlastungsstutzen 4 liegt im Inneren des Zwischenstutzens 5 an einer Abstützfläche 541 an, die an einem Innenflansch 54 vorgesehen ist. Die genannten Anschlagsfläche 111 und Abstützfläche 541 können in einer Ebene liegen oder auch gekrümmt oder geneigt, z.B. konisch ausgebildet sein. Das Dichtelements 3 und der Zugentlastungsstutzen 4 sind somit zwischen der Anschlagsfläche 111 und der Abstützfläche 541 eingespannt.

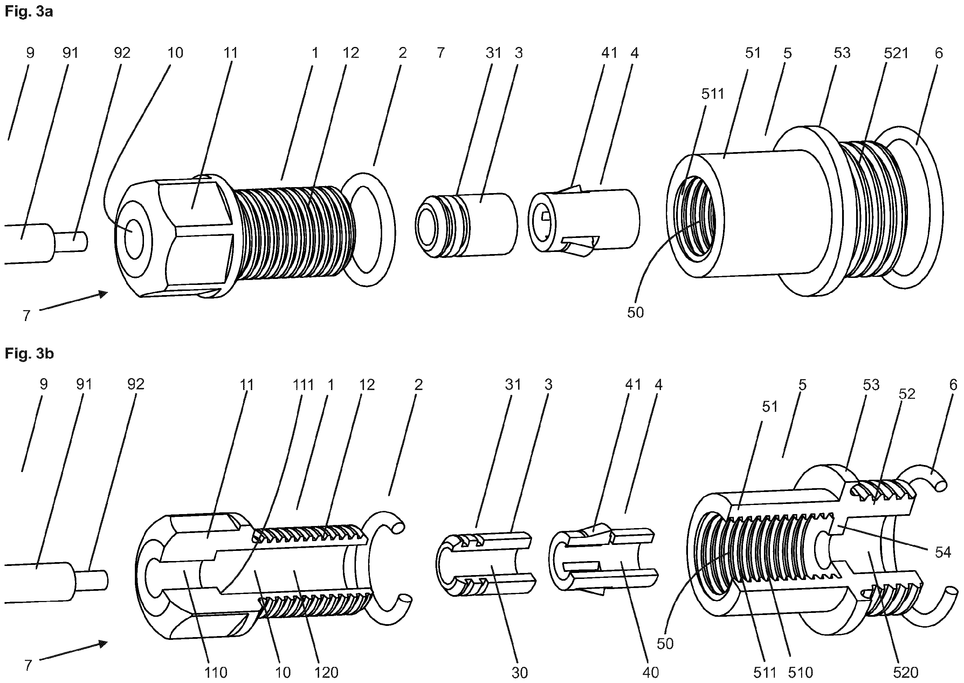

Fig. 3a zeigt die erfindungsgemässe Kabelverschraubung 7 aus Fig. 1a zur Durchführung eines Kabels 9 mit einem Zwischenstutzen 5 in Explosionsdarstellung. Die Kabelverschraubung 7 umfasst einen Montagestutzen 1, ein Dichtelement 3 und einen Zugentlastungstutzen 4. In der gezeigten Ausgestaltung umfasst die Kabelverschraubung 7 zudem einen ersten Dichtungsring 2 und einen zweiten Dichtungsring 6.

Am Dichtelement 3 sind zwei Dichtungsstege 31 angeformt oder eingeformt. Die beiden gezeigten Dichtungsstege 31 sind in dieser vorzugsweisen Ausgestaltung als ringförmig verlaufende Dichtungsnuten ausgebildet. Die Dichtungsstege 31 erhöhen die Komprimierbarkeit des Dichtelements 3. Am Zugentlastungsstutzen 4 sind Klemmelemente 41 angeformt. Das Kabel 9 ist durch den Montagestutzenkanal 10 im Montagestutzen 1 und einen Zwischenstutzenkanal 50 im Zwischenstutzen 5 hindurch führbar.

Fig. 3b zeigt die Kabelverschraubung 7 mit dem Zwischenstutzen 5 aus Fig. 3a mit einem Viertelschnitt. Der Montagestutzenkanal 10 im Montagestutzen 1 umfasst einen Eingangskanal 110 und einen Montagekanal 120, die an der Anschlagsfläche 111 gegeneinander abgestuft sind. Am Übergang zwischen dem Eingangskanal 110 und dem Montagekanal 120 liegt somit die Anschlagfläche 111, mit welcher das Dichtelement 3 beaufschlagbar ist. Das Dichtelement 3 weist einen Dichtelementkanal 30 auf, durch den das Kabel 9 durchführbar ist. Der Zugentlastungsstutzen 4 weist einen Entlastungskanal 40 auf, durch den das Kabel 9 durchführbar ist. Der Zwischenstutzen 5 weist einen Zwischenstutzenkanal 50 auf, der einen Aufnahmekanal 510 und einen Ausgangskanal 520 umfasst, die durch einen Innenflansch 54 voneinander getrennt sind.

Fig. 3c zeigt in einer bevorzugten Ausgestaltung die erfindungsgemässe Kabelverschraubung 7 und den Zwischenstutzen 5 aus Fig. 3b während des Montagevorgangs. Das Dichtelement 3 wurde bis zur Anschlagsfläche 111 in den Montagekanal 120 eingeführt. Der Zugentlastungsstutzen 4 wurde ebenfalls bis zum Dichtelement 3 in den Montagekanal 120 eingeführt. Bei diesem Vorgang wurden die Klemmelemente 41, die durch Aussparungen 42 freigelegt sind, gegen die Mittelachse X verdrängt bzw. gedreht, sodass der Aussendurchmesser des Zugentlastungsstutzen 4 über die gesamte Länge auf maximal den Innendurchmesser des Montagekanals 120 reduziert wurde. Der Zugentlastungsstutzen 4 liegt am Dichtelement 3 an, übt auf dieses jedoch noch keine Kraft aus. Das Frontstück des Zugentlastungsstutzens 4 ragt um den Vorsprung e aus dem Montagekanal 120 hervor. Der Zugentlastungsstutzen 4 kann daher noch zumindest um die Distanz des Vorsprungs e eingeschoben werden, um das Dichtelements 3 zu komprimieren. Der Vorsprung e beträgt vorzugsweise einen oder mehrere Millimeter, oder auch ein Bruchteil davon. Der Vorsprung e wird in Abhängigkeit insbesondere der Komprimierbarkeit des Dichtelements 3 gewählt.

Fig. 3d zeigt eine Detaildarstellung von am Stutzenkopf 11 vorgesehenen Ringschneiden 115, die gegen die Stirnseite des ersten Stutzenabschnitts 51 des Zwischenstutzens 5 gerichtet sind und beim Eindrehen des Montagestutzens 1 in den Zwischenstutzen 5 in diese Stirnseite eindringen können. Der Raum zwischen dem Montagestutzen 1 und den Zwischenstutzen 5 kann daher dicht abgeschlossen werden, ohne dass der oben beschriebene erste Dichtungsring 2 benötigt wird. Auch am Aussenflansch 53 des Zwischenstutzens 5 sind Ringschneiden 515 vorgesehen, die in ein benachbartes Werkstück eindringen können. Die Ringschneiden 115, 515 können auf der einen oder anderen oder auf beiden Anschlagseiten vorgesehen sein.

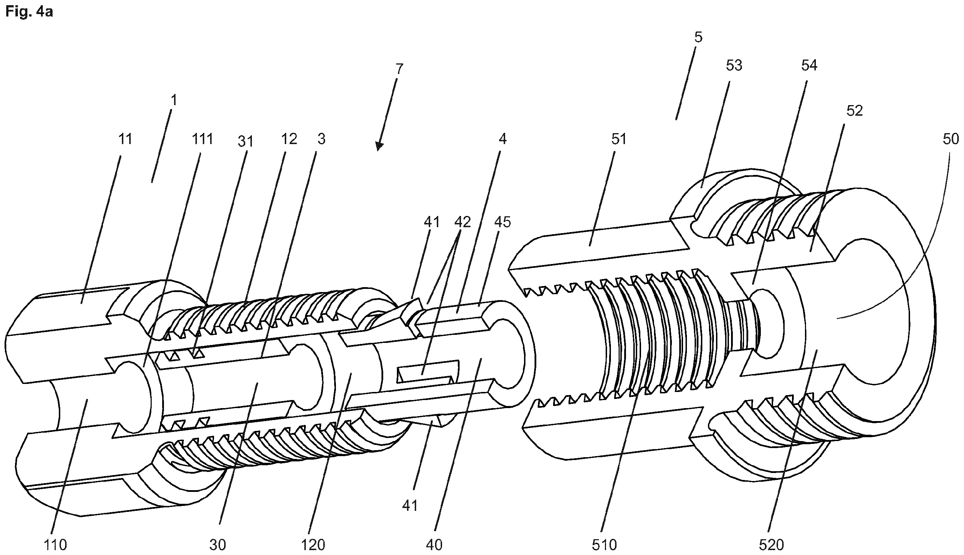

Fig. 4a zeigt die Kabelverschraubung 7 und den Zwischenstutzen 5 aus Fig. 3a mit einem Viertelschnitt in partieller Explosionsdarstellung. Das Dichtelement 3 ist im Montagekanal 120 angeordnet und bis zum Anschlag an der Anschlagfläche 111 eingeschoben. Der Zugentlastungsstutzen 4, der einen hohlzylindrischen Stutzenkörper 45 und zwei daran vorgesehene und durch Ausnehmungen oder Einschnitte 42 freigelegte Klemmelemente 41 aufweist, ist ebenfalls teilweise in den Montagekanal 120 eingeführt. Es ist ersichtlich, dass die beiden Klemmelemente 41 nach aussen ansteigende Rampen aufweisen, die das weitere Einschieben des Zugentlastungsstutzens 4 behindern.

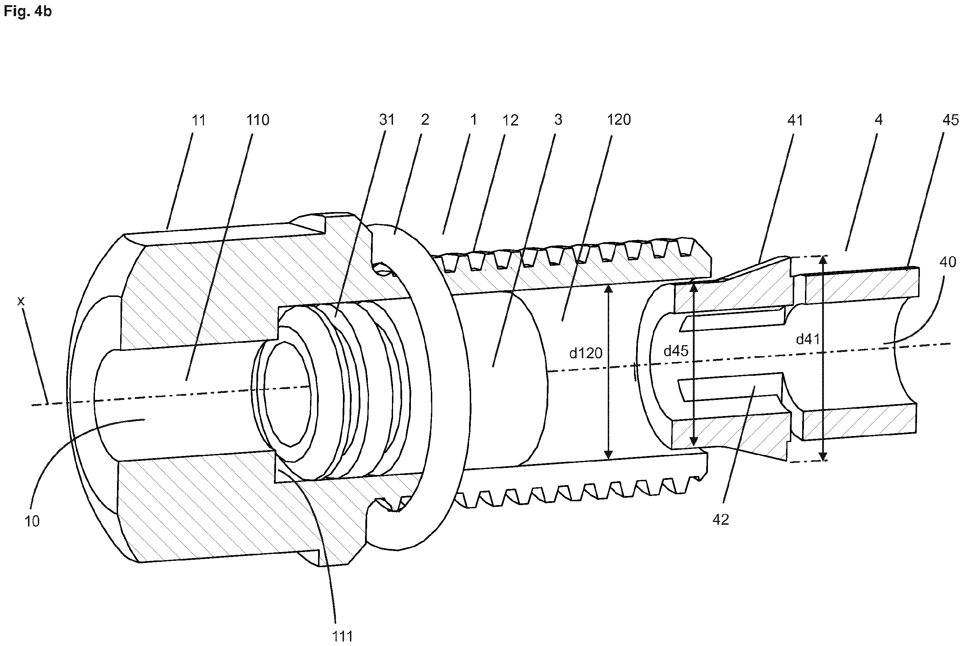

Fig. 4b zeigt die Kabelverschraubung 7 aus Fig. 4a mit dem vollständig in den Montagekanal 120 des Montagestutzens 1 eingeführten Dichtelement 3 sowie mit dem teilweise in den Montagekanal 120 eingeführten Zugentlastungsstutzen 4, für den ein erster Aussendurchmesser d45 des Körpers 45 ausserhalb der Klemmelemente 41 und ein zweiter Aussendurchmesser d41 eingezeichnet ist, der die Rampenenden der Klemmelemente 41 miteinander verbindet. Der zweite Aussendurchmesser d41 ist daher um die doppelte Höhe einer Rampe grösser als der erste Aussendurchmesser d45 des Zugentlastungsstutzens 4. Die Klemmelemente 41, die über ein Biegegelenk mit dem Stutzenkörper 45 verbunden sind, müssen daher um einen Winkel eingetreten werden, welcher dem Winkel entspricht, den die Rampen einschliessen. D.h., die Klemmelemente 41 sind zu drehen, bis die Oberflächen der Rampen in einer Linie mit der Oberfläche des Stutzenkörpers 45 liegen.

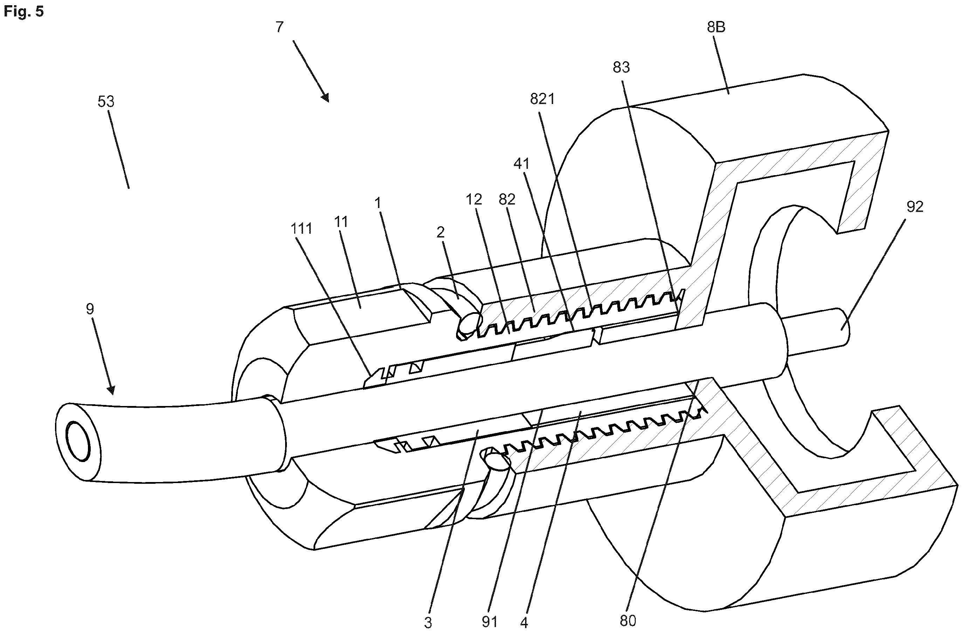

Fig. 5 zeigt die Kabelverschraubung 7 an einem Gehäuse 8B von Fig. 1b mit einem Viertelschnitt. Der Montagestutzen 1 ist über das Aussengewinde am Stutzenschaft 12 in das Innengewinde 821 auf Anschlag an der Abstützfläche 83 in den Einführstutzen 82 eingeschraubt. Durch die Abstützfläche 83 und die Anschlagfläche 111 werden das Dichtelement 3 und der Zugentlastungsstutzen 4 axial von entgegengesetzten Seiten beaufschlagt, weshalb das Dichtelement 3 so komprimiert wird, dass es eng am installierten Kabel 9 anliegt. Ein am Zugentlastungsstutzen 4 angeformtes Klemmelement 41 wird durch die Innenfläche des Montagekanals 120 deformiert und in Richtung der Mittelachse x der Kabelverschraubung 7 gegen das Kabel 9 gepresst, weshalb das Kabel 9 auch unter Einwirkung von Zugkräften fest gehalten ist.

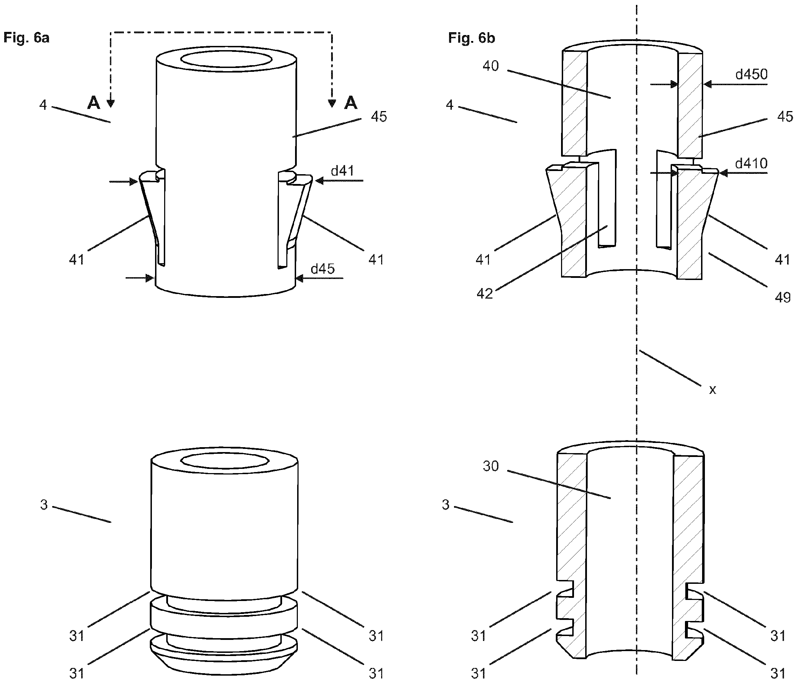

Fig. 6a zeigt einen Zugentlastungsstutzen 4 und ein Dichtelement 3. Am Dichtelement 3 sind zwei Dichtungsstege 31 angeformt. Am Zugentlastungsstutzen 4 sind zwei Klemmelemente 41 angeformt. Es ist gezeigt, dass der erste Aussendurchmesser d45 des Stutzenkörpers 45 ausserhalb des Bereichs der Klemmelemente 41 kleiner ist als der zweite Aussendurchmesser d41 an den oberen Enden der Klemmelemente 41.

Fig. 6b zeigt den Zugentlastungsstutzen 4 und das Dichtelement 3 in einer Schnittdarstellung entlang der in Fig. 6a eingezeichneten Schnittlinie A--A. Angrenzend zu den Klemmelementen 41 sind am Zugentlastungsstutzen 4 Aussparungen oder Ausschnitte 42 eingeformt, durch die die Klemmelemente 41 oben und seitlich freigelegt sind, weshalb nur an der Unterseite eine Verbindung durch ein Biegegelenk 49 mit dem Stutzenkörper 45 vorliegt. Die Klemmelemente 41 können daher um dieses Biegegelenk 49 gedreht werden.

Eingezeichnet ist ferner die Wanddicke d450 des hohlzylindrischen Stutzenkörpers 45 ausserhalb der Klemmelemente 41 sowie die Wanddicke d410 an den Enden der Klemmelemente 41, die um die Höhe einer Rampe erhöht ist.

### Bezugszeichenliste

- 1: Montagestutzen
- 10: Montagestutzenkanal
- 11: Stutzenkopf mit Schlüsselfläche
- 110: Eingangskanal
- 111: Anschlagfläche
- 12: Stutzenschaft mit Aussengewinde
- 120: Montagekanal
- 2: Dichtungsring
- 3: Dichtelement
- 30: Dichtelementkanal
- 31: Dichtungssteg
- 4: Zugentlastungsstutzen
- 40: Entlastungskanal
- 41: Klemmelement
- 42: Aussparung
- 45: Stutzenkörper
- 49: Biegegelenk
- 5: Zwischenstutzen
- 50: Zwischenstutzenkanal
- 51: erster Stutzenabschnitt
- 510: Aufnahmekanal
- 511: Innengewinde
- 52: zweiter Stutzenabschnitt
- 520: Ausgangskanal
- 521: Aussengewinde
- 53: Aussenflansch
- 54: Innenflansch
- 541: Abstützfläche
- 6: zweiter Dichtungsring
- 7: Kabelverschraubung
- 8A: Montagewand
- 8B: Gehäuse
- 80: Montageöffnung
- 81: Innengewinde
- 82: Einführstutzen
- 821: Innengewinde
- 83: Abstützfläche
- 9: Kabel
- 91: Kabelmantel
- 92: Leiter
- d41: zweiter Aussendurchmesser
- d410: Wanddicke im Bereich des zweite Aussendurchmessers
- d45: erster Aussendurchmesser
- d450: Wanddicke im Bereich des ersten Aussendurchmessers
- e: Vorsprung

## Patentansprüche

1. Kabelverschraubung (7 ) mit einer Mittelachse (x) zur
Durchführung eines Kabels (9) durch eine Montageöffnung (80) in einer Montagewand (8A) oder einem Gehäuse (8B), insbesondere einer Gehäusewand eines elektrischen Geräts oder eines elektrischen Schranks,
mit einem zumindest annähernd hohlzylinderförmigen Montagestutzen (1), der wenigstens ein Aussengewinde (12) und einen der Durchführung des Kabels (9) dienenden Montagestutzenkanal (10) aufweist, welcher durch eine Anschlagfläche (111) in einen Eingangskanal (110) und einen einen Innendurchmesser (d120) aufweisenden Montagekanal (120) unterteilt ist; und
mit einem im Montagekanal (120) angeordneten Dichtelement (3), welches einen zumindest annähernd koaxial zur Mittelachse (x) ausgerichteten Dichtelementkanal (30) zur Durchführung des Kabels (9) aufweist; und
mit einem Zugentlastungsstutzen (4), der einen zumindest annähernd koaxial zur Mittelachse (x) ausgerichteten Entlastungskanal (40) zur Durchführung des Kabels (9), der wenigstens ein Klemmelement (41) und der ausserhalb des Bereichs des wenigstens einen Klemmelements (41) einen ersten Aussendurchmesser (d45) aufweist, welcher derart gewählt ist, dass der Zugentlastungsstutzen (4) angrenzend zum Dichtelement (3) in den Montagekanal (120) einführbar ist,
wobei der Zugentlastungsstutzen (4) im Bereich des wenigstens einen Klemmelements (41) einen zweiten Aussendurchmesser (d41 ) aufweist, der grösser ist als der Innendurchmesser (d120) des Montagekanals (120) und dass das wenigstens eine Klemmelement (41) derart ausgebildet und/oder gelagert ist, dass es beim Einschieben des Zugentlastungsstutzens (4) in den Montagekanal (120) gegen die Mittelachse der Kabelverschraubung (7) verdrängbar ist, um den Kabelmantel (92) des durchgeführten Kabels (9) zu beaufschlagen und wobei
der Aussendurchmesser des Dichtelements (3) so gewählt ist, dass das Dichtelement (3) zumindest annähernd formschlüssig in den Montagekanal (120) einführbar ist und wobei die Kabelverschraubung (1)
einen Zwischenstutzen (5) umfasst, der
- einen ersten Stutzenabschnitt (51) mit einem zur Durchführung des Kabels (9) geeigneten und mit einem Innengewinde (511) versehenen Aufnahmekanal (510);
- einen mit einem Aussengewinde (521) versehenen zweiten Stutzenabschnitt (52) mit einem zur Durchführung des Kabels (9) geeigneten Ausgangskanal (520);
- einen zwischen dem ersten Stutzenabschnitt (51) und dem zweiten Stutzenabschnitt (52) an der Aussenseite des Zwischenstutzens (5) angeordneten Aussenflansch (53);
- einen zwischen dem ersten Stutzenabschnitt (51) und dem zweiten Stutzenabschnitt (52) an der Innenseite des Zwischenstutzens (5) angeordneten Innenflansch (54) mit einer Abstützfläche (541) aufweist.

2. Kabelverschraubung (7) nach Anspruch 1, wobei das wenigstens eine Klemmelement (41) vorzugsweise keilförmig oder rampenförmig ausgebildet ist und eine Aussenfläche aufweist, die vorzugsweise in Richtung zur Anschlagfläche (111) gegen die Mittelachse (x) geneigt ist.

3. Kabelverschraubung (7) nach Anspruch 1 oder 2, wobei das wenigstens eine Klemmelement (41) durch Einschnitte oder Aussparungen (42) am Zugentlastungsstutzen (4) zumindest teilweise freigelegt und vorzugsweise gelenkig gelagert ist und/oder dass das wenigstens eine Klemmelement (41) als Schnappelement ausgebildet ist.

4. Kabelverschraubung (7) nach Anspruch 1, 2 oder 3, wobei der vorzugsweise hohlzylindrisch ausgestaltete Zugentlastungsstutzen (4) zumindest zwei Klemmelemente (41) aufweist, die entlang der Mittelachse (x) auf gleicher Höhe oder gegeneinander versetzt und entlang dem Umfang des Zugentlastungsstutzens (4) vorzugsweise gleichmässig beabstandet sind.

5. Kabelverschraubung (7) nach einem der Ansprüche 1 - 4, wobei das vorzugsweise elastische Dichtelement (3) zumindest annähernd hohlzylindrisch ausgestaltet ist und zumindest einen Dichtungssteg (31) aufweist.

6. Kabelverschraubung (7) nach einem der Ansprüche 1 - 5, wobei das an der Anschlagfläche (111) anliegende Dichtelement (3) und der am Dichtelement (3) anliegende Zugentlastungsstutzen (4) im nicht mechanisch beaufschlagten Zustand um zumindest 0.5mm, vorzugsweise um zumindest 1mm, aus dem Montagekanal (120) hinausragen.

7. Kabelverschraubung (7) nach einem der Ansprüche 1 - 6, wobei der Zugentlastungsstutzen (4) einen Hauptkörper (45) aufweist, an dem das zumindest eine Klemmelement (41) angeordnet ist und dass der Hauptkörper (45) und das Klemmelement (41) aus unterschiedlichen Materialien gefertigt sind und/oder dass der Zugentlastungsstutzen (4) durch Spritzgiessen, vorzugsweise durch 2k-Spritzgiessen, hergestellt ist.

8. Kabelverschraubung ( 7 nach Anspruch 1, wobei der Zwischenstutzen (5) aus einem elektrisch leitenden Material gefertigt ist und über den Innenflansch (54) oder daran angeordnetes Kontaktelement eine elektrisch leitende Verbindung zum Kabelmantel (92) oder einem Kabelschirm herstellt.

9. Kabelverschraubung (7) nach Anspruch 8 oder 1, wobei zwischen dem Montagestutzen (1) und dem Gehäuse (8B) oder dem Zwischenstutzen (5) und/oder zwischen dem Zwischenstutzen (5), insbesondere dem Aussenflansch (53), und der Montagewand (8A) wenigstens je ein Dichtungselement in der Ausgestaltung eines vorzugsweise elastischen Dichtungsrings (2; 6) oder in der Ausgestaltung wenigstens einer Ringschneide (115) vorgesehen ist, die am Montagestutzen (1) und/oder am Aussenflansch (53) des Zwischenstutzens (5) angeformt ist und in das benachbarte Werkstück eindringen kann.

10. Kabelverschraubung (7) nach einem der Ansprüche 1 - 9, wobei das Dichtelement (3) aus Gummi, Kautschuk, Silikon, einem Elastomermaterial, einem thermoplastischen Elastomermaterial oder einem zumindest teilelastischen Kunststoffmaterial gefertigt ist und/oder dass der Zugentlastungsstutzen (4) aus einem Polymermaterial, insbesondere einem Polypropylenmaterial oder Polyamid, oder aus Metall gefertigt ist.

11. Kabelverschraubung (7) nach einem der Ansprüche 1 - 10, wobei das Material des Dichtelements (3) einen geringeren Elastizitätsmodul als das Material des Zugentlastungsstutzens (4) aufweist und/oder dass das Dichtelement (3) und der Zugentlastungsstutzen (4) miteinander verklebt oder einstückig ausgeführt sind.

12. Elektrischer Steckverbinder mit einer Kabelverschraubung (7) nach einem der Ansprüche 1 - 11.

13. Elektrisches Gerät, insbesondere ein elektrischer Schaltschrank, mit mindestens einer Kabelverschraubung (7) nach einem der Ansprüche 1 - 11.

## Claims

1. Cable gland (7) with a central axis (x) for leading a cable (9) through a mounting opening (80) in a mounting wall (8A) or a housing (8B), in particular a housing wall of an electrical device or an electrical cabinet,
with an at least approximately hollow cylindrical mounting socket (1), which has at least one external thread (12) and a mounting socket channel (10) serving to lead through the cable (9), which through a stop surface (111) into an input channel (110) and an inner diameter (d120) having mounting channel (120) is divided; and
with a sealing element (3) which is arranged in the assembly duct (120) and which has a sealing element duct (30), which is at least approximately coaxially to the central axis (x), for the passage of the cable (9); and
with a strain relief connector (4) which has a relief channel (40), which is at least approximately coaxial to the central axis (x), for the passage of the cable (9), the at least one clamping element (41) and the outside of the area of the at least one clamping element (41) first outside diameter (d45), which is selected such that the strain relief connector (4) can be introduced into the assembly channel (120) adjacent to the sealing element (3),
**characterized in that** the strain relief connector (4) in the area of the at least one clamping element (41 ) has a second outside diameter (d45) which is larger than the inside diameter (d120) of the mounting channel (120) and that the at least one clamping element (41) is designed and / or supported in such a way that it is in the mounting channel (120) can be displaced against the central axis of the cable screw connection (7) in order to act on the cable sheath (92) of the cable (9) that is passed through, and that the outside diameter of the sealing element (3) is selected that the sealing element (3) can be introduced into the assembly channel (120) at least approximately in a form-fitting manner, and that the cable screw connection (7) comprises an intermediate stub (5) which comprises
- a first socket section (51) with a receiving channel (510) which is suitable for the passage of the cable (9) and is provided with an internal thread (511);
- a second connecting piece section (52) provided with an external thread (521) and having an outlet channel (520) suitable for passing through the cable (9);
- an outer flange (53) arranged between the first nozzle section (51) and the second nozzle section (52) on the outside of the intermediate nozzle (5);
- an inner flange (54) with a support surface (541) arranged between the first nozzle section (51) and the second nozzle section (52) on the inside of the intermediate nozzle (5).

2. Cable gland (7) according to claim 1, **characterized in that** the at least one clamping element (41) is preferably wedge-shaped or ramp-shaped and has an outer surface which is preferably inclined towards the stop surface (111) against the central axis (x).

3. Cable gland (7) according to one of claims 1 or 2, **characterized in that** the at least one clamping element (41) is at least partially exposed and preferably articulated through incisions or recesses (42) on the strain relief connector (4) and / or that the at least one clamping element (41) is designed as a snap element.

4. Cable gland (7) according to one of claims 1, 2 or 3, **characterized in that** the preferably hollow-cylindrical strain relief connector (4) has at least two clamping elements (41) which are at the same height along the central axis (x) or offset from one another and along the circumference of the Strain relief connector (4) are preferably evenly spaced.

5. Cable gland (7) according to one of claims 1 - 4, **characterized in that** the preferably elastic sealing element (3) is at least approximately hollow-cylindrical and has at least one sealing web (31).

6. Cable gland (7) according to one of claims 1 - 5, **characterized in that** the sealing element (3) resting on the stop surface (111) and the strain relief connector (4) resting on the sealing element (3) in the non-mechanically loaded state by at least 0.5mm, preferably protrude from the assembly channel (120) by at least 1 mm.

7. Cable gland (7) according to one of claims 1 - 6, **characterized in that** the strain relief connector (4) has a main body (45) on which the at least one clamping element (41) is arranged and that the main body (45) and the clamping element ( 41) are made of different materials and / or that the strain relief connector (4) is made by injection molding, preferably by 2k-injection molding.

8. Cable gland (7) according to claim 1, **characterized in that** the intermediate stub (5) is made of an electrically conductive material and creates an electrically conductive connection to the cable sheath (92) or a cable shield via the inner flange (54) or the contact element arranged thereon.

9. Cable gland (7) according to one of claims 8 or 1, **characterized in that** between the mounting socket (1) and the housing (8B) or the intermediate socket (5) and / or between the intermediate socket (5), in particular the outer flange (53), and the mounting wall (8A) is provided with at least one sealing element each in the form of a preferably elastic sealing ring (2; 6) or in the form of at least one cutting edge (115) which is attached to the mounting socket (1) and / or the outer flange (53) of the intermediate socket ( 5 is formed and can penetrate into the adjacent workpiece.

10. Cable gland (7) according to one of claims 1 - 9, **characterized in that** the sealing element (3) is made of rubber, caoutchouc, silicone, an elastomer material, a thermoplastic elastomer material or an at least partially elastic plastic material and / or that the strain relief connector (4) is made of a polymer material, in particular a polypropylene material or polyamide, or of metal.

11. Cable gland (7) according to one of claims 1 - 10, **characterized in that** the material of the sealing element (3) has a lower modulus of elasticity than the material of the strain relief connector (4) and / or that the sealing element (3) and the strain relief connector (4) are glued together or made in one piece.

12. Electrical connector with a cable screw connection (7) according to one of claims 1 - 11.

13. Electrical device, in particular an electrical switch cabinet, with at least one cable screw connection (7) according to one of claims 1 - 11.

## Revendications

1. Presse-étoupe (1) avec un axe central (x) pour faire passer un câble (9) à travers une ouverture de montage (80) dans une paroi de montage (8A) ou un boîtier (8B), en particulier une paroi de boîtier d'un appareil électrique ou une armoire électrique,
avec un au moins douille de montage cylindrique sensiblement creux (1), qui présente au moins un filetage extérieur (12) et un canal de prise de montage (10) servant à entraîner par l'intermédiaire du câble (9) qui, à travers une surface de butée (111) dans un canal d'entrée (110) et un diamètre intérieur (D120) ayant le canal de montage (120) est divisée; et
avec un élément d'étanchéité (3) qui est disposé dans le conduit d'assemblage (120) et qui présente un conduit d'élément d'étanchéité (30), qui est au moins approximativement coaxialement à l'axe central (x), pour le passage du câble (9 ); et
avec un connecteur de décharge de traction (4) qui présente un canal de décharge (40), qui est au moins approximativement coaxial à l'axe central (x), pour le passage du câble (9), le au moins un élément de serrage (41) et l'extérieur de la zone de l'au moins un élément de serrage (41) de premier diamètre extérieur (D45), qui est choisi de telle sorte que le connecteur de décharge de traction (4) peut être introduit dans le canal d'assemblage (120) adjacente à la l' élément d' étanchéité (3),
**caractérisé en ce que** le connecteur de décharge de traction (4) dans la zone du au moins un élément de serrage (41) présente un second diamètre extérieur (D45) qui est plus grand que le diamètre intérieur (d120) de le canal de montage (120) et **en ce que** le au moins un élément de serrage (41) est conçu et / ou pris en charge de manière à ce qu'il est dans le canal de montage (120) peut être déplacé à l' encontre de l'axe central de la connexion du câble à vis ( 7) pour agir sur la gaine (92) du câble (9) traversé. et que le diamètre extérieur de l'élément d'étanchéité (3) est choisie pour que l'élément d'étanchéité (3) peut être introduit au moins approximativement de manière positive dans le canal d'assemblage (120) et que le passe-câbles à vis (7) comprend un tronçon intermédiaire (5) qui présente
- un premier tronçon de douille (51) avec un canal de réception (510) qui convient au passage du câble (9) et est pourvu d'un taraudage (511);
- un deuxième tronçon de pièce de raccordement (52) pourvu d'un filetage extérieur (521) et comportant un canal de sortie (520) apte à traverser le câble (9) ;
- une bride externe (53) disposée entre la première section de buse (51) et la deuxième section de buse (52) à l'extérieur de la buse intermédiaire (5);
- une bride intérieure (54) avec une surface d'appui (541) disposée entre la première section de buse (51) et la deuxième section de buse (52) à l'intérieur de la buse intermédiaire (5).

2. Presse-étoupe (7) selon la revendication 1, **caractérisé en ce que** le au moins un élément de serrage (41) est de préférence en forme de coin ou en forme de rampe et présente une surface extérieure qui est de préférence inclinée vers la surface de butée (111) contre la partie centrale axe (x).

3. Presse-étoupe (7) selon l'une des revendications 1 ou 2, **caractérisé en ce que** le au moins un élément de serrage (41) est au moins partiellement exposé et de préférence articulé à travers des incisions ou des évidements (42) sur le connecteur de décharge de traction (4) et/ou que le au moins un élément de serrage (41) est conçu comme un élément de pression.

4. Presse-étoupe (7) selon l'une des revendications 1, 2 ou 3, **caractérisé en ce que** le connecteur de décharge de traction de préférence cylindrique creux (4) présente au moins deux éléments de serrage (41) qui sont à la même hauteur le long de l'axe central (x) ou décalé par rapport à l'autre et le long de la circonférence du raccord de décharge de traction (4) sont de préférence régulièrement espacées.

5. Presse-étoupe (7) selon l'une des revendications 1 - 4, **caractérisé en ce que** l'élément d'étanchéité (3) de préférence élastique est au moins approximativement cylindrique creux et présente au moins une nervure d'étanchéité (31).

6. Presse-étoupe (7) selon l'une des revendications 1 - 5, **caractérisé en ce que** l'élément d'étanchéité (3) reposant sur la surface de butée (111) et le connecteur de décharge de traction (4) reposant sur l'élément d'étanchéité (3) dans l'état chargé d'au moins 0,5 mm, de préférence saillie à partir du canal d'assemblage (120) d'au moins 1 mm.

7. Presse-étoupe (7) selon l'une des revendications 1 - 6, **caractérisé en ce que** le connecteur de décharge de traction (4) présente un corps principal (45) sur lequel le au moins un élément de serrage (41) est disposé et que le corps principal (45) et l'élément de serrage (41) sont réalisés dans des matériaux différents et / ou que le connecteur de décharge de traction (4) est réalisée par moulage par injection, de préférence par moulage par injection 2k.

8. Presse-étoupe (7) selon la revendication 1, **caractérisé en ce que** l'embout intermédiaire (5) est réalisé en un matériau électriquement conducteur et établit une connexion électriquement conductrice avec la gaine de câble (92) ou un blindage de câble via la bride intérieure (54) ou l'élément de contact disposé dessus.

9. Presse-étoupe (7) selon l'une des revendications 8 ou 1, **caractérisé en ce qu'**entre la douille de montage (1) et le boîtier (8B) ou la douille intermédiaire (5) et/ou entre la douille intermédiaire (5), notamment la bride (53) et la paroi de montage (8A) est muni d'au moins un élément d'étanchéité chacun sous la forme d'une bague d'étanchéité de préférence élastique (2; 6) ou sous la forme d'au moins une arête de coupe (115) qui est fixé à la douille de montage (1) et / ou la bride extérieure (53) de la douille intermédiaire (5) est formé et peut pénétrer dans la pièce adjacente.

10. Presse-étoupe (7) selon l'une des revendications 1 - 9, **caractérisé en ce que** l'élément d'étanchéité (3) est en caoutchouc, caoutchouc, silicone, un matériau élastomère, un matériau élastomère thermoplastique ou une matière plastique au moins partiellement élastique et/ ou que le connecteur de décharge de traction (4) est constitué d'un matériau polymère, en particulier un matériau de polypropylene ou de polyamide, ou de métal.

11. Presse-étoupe (7) selon l'une des revendications 1 - 10, **caractérisé en ce que** le matériau de l'élément d'étanchéité (3) a un module d'élasticité inférieur à celui du matériau du connecteur de décharge de traction (4) et/ou que l'élément d'étanchéité (3) et le connecteur de décharge de traction (4) sont collés ensemble ou d'une seule pièce.

12. Connecteur électrique avec passe-câbles à vis (7) selon l'une des revendications 1 - 11.

13. Appareil électrique, en particulier armoire électrique, avec au moins un passe-câbles à vis (7) selon l'une des revendications1 - 11.
